# EUROPEAN PATENT APPLICATION

(11) **EP 4 841 797 A1**
(43) Date of publication of application: **18.11.2026**
(21) Application number: 26177926.8
(22) Date of filing: 11.05.2026
(51) Int. Cl.: H01M 50/507, H01M 50/211, H01M 50/249, H01M 50/258

(54) **CELL GROUP MODULE, BATTERY PACK, AND ELECTRICAL DEVICE**

(30) Priority: 16.05.2025 CN 202520982541 U
(71) Applicant: AESC Japan Ltd., Yokohama-shi, Kanagawa 220-0012 (JP)
(72) Inventor: ZHANG, Xu, Pudong New Area Shanghai, 201315 (CN); ZHANG, Wenjia, Pudong New Area Shanghai, 201315 (CN); FU, Fangkai, Pudong New Area Shanghai, 201315 (CN); HE, Yafei, Pudong New Area Shanghai, 201315 (CN)
(74) Representative: Becker, Eberhard

(57) **Abstract**

A cell group module (100), a battery pack, and an electrical device are provided. The cell group module (100) includes: a plurality of cell stacks (1), having connecting terminal tabs, and including a plurality of cells (11); connecting beams (2), arranged between two adjacent cell stacks (1); two side panel assemblies (3) distributed on both sides of the cell stacks (1), the side panel assembly (3) includes a plurality of side panel segments (31), the side panel segments (31) located on both sides of the same cell stack (1) are detachably connected to both ends of the connecting beam (2) respectively and clamp the cell stack (1); bridging busbars (43); connecting terminal busbars (42) connected to the connecting terminal tabs, wherein the connecting terminal busbars (42) connected to the connecting terminal tabs of two adjacent cell stacks (1) are interconnected via the bridging busbars (43).

## Description

### BACKGROUND

### Technical Field

The present disclosure relates to the sector of power battery technology, and particularly relates to a cell group module, a battery pack, and an electrical device.

### Related Art

With the widespread deployment of battery technology, it is frequently necessary to employ multiple cell stack assemblies in combination to satisfy electrical power requirements. During installation, in addition to considerations of space utilization, electrical safety considerations shall also be addressed. In particular, busbars interconnecting the high-voltage terminals via tab connections of adjacent cell stack assemblies are generally directly interconnected; in such configurations, a creepage distance at the connection is relatively short, which is liable to give rise to electrical safety hazards.

### SUMMARY

**In** view of the shortcomings of the related art described above, the objective of the present disclosure is to provide a cell group module, a battery pack, and an electrical device to solve the problem in the related art wherein the tabs of high-voltage connection terminals between adjacent cell stacks are positioned in close proximity, resulting in a short (insufficient) creepage distance during connection and reduced safety, thereby improving space utilization and safety performance.

For achieving the above purpose and other related purposes, the present disclosure provides a cell group module, including:
A plurality of cell stacks, the plurality of cell stacks are arranged along a first direction, the cell stacks have connecting terminal tabs, and each of the cell stacks includes a plurality of cells stacked along a second direction;
A connecting beam, the connecting beam is arranged between two of the adjacent cell stacks;
Two side panel assemblies, the two side panel assemblies are distributed on both sides of the cell stack along the second direction, each of the side panel assemblies includes a plurality of side panel segments distributed along the first direction and detachably connected, the side panel segments located on both sides of the same cell stack are detachably connected to both ends of the corresponding connecting beam respectively, and the side panel segments are capable of clamping and fixing the cell stack when connected to the connecting beam;

### Bridging busbars;

Connecting terminal busbars, connected to the connecting terminal tabs, and the connecting terminal busbars correspondingly connected to the connecting terminal tabs of two of the adjacent cell stacks are, at least in part, offset from one another in projection along the first direction and are interconnected via the bridging busbars.

Optionally, a portion of the cells of the same cell stack forms a first sub-stack, and another portion of the cells forms a second sub-stack, the first sub-stacks of the two adjacent cell stacks are close to the same side panel assembly, the second sub-stacks of the two adjacent cell stacks are close to the other side panel assembly. The connecting terminal tabs include a first tab of the first sub-stack and a second tab of the second sub-stack. The first tab of the first sub-stack and the second tab of the second sub-stack in the same cell stack are connected through the bridging busbar to the second tab of the second sub-stack and the first tab of the first sub-stack in the adjacent cell stack, respectively.

Optionally, the number of the cells of two of the first sub-stacks of the two adjacent cell stacks are not equal to each other, and the number of the cells of two of the second sub-stacks of the two adjacent cell stacks are not equal to each other.

Optionally, a height direction of the connecting beam is a third direction. In the third direction, the top of the connecting beam is lower than the top of the cell stack, and the bridging busbar is fixed on the top of the connecting beam.

Optionally, the first tab and the second tab connected by the same bridging busbar are of opposite polarities, and a portion between both ends of one of the bridging busbars extends along the second direction across the other bridging busbar and is spaced apart from the other bridging busbar in the third direction.

Optionally, the cell group module further includes an insulating member. A portion between the both ends of the bridging busbar is a bridging portion, and the insulating member covers the bridging portion.

Optionally, an insulating partition is disposed between the first sub-stack and the second sub-stack of the same cell stack, and the connecting terminal busbar is mounted on the insulating partition through a busbar bracket.

Optionally, the cell group module further includes a connecting terminal base. The connecting terminal base is mounted on the connecting beam, and the connecting terminal busbar and the bridging busbar are connected and fixed on the connecting terminal base.

Optionally, the cell group module further includes a battery management system. The battery management system includes a plurality of slave control panels. The slave control panels are mounted and fixed on the side panel segments, and the slave control panels are electrically connected to the cell stacks corresponding to the side panel segments.

Optionally, the cell includes a pouch cell.

For achieving the above objectives and other related objectives, the present disclosure further provides a battery pack, including the cell group module as described above.

Optionally, the battery pack further includes an upper cover and a plate-shaped lower housing. The upper cover and the lower housing are connected in a sealed manner to define an installation space accommodating the cell group module, and the installation space is filled with a coolant that submerges the cell stack.

For achieving the above objectives and other related objectives, the present disclosure further provides an electrical device, including the cell group module as described above.

Optionally, the electrical device includes a vehicle. The bottom of the vehicle has an installation space, and the cell group module is installed in the installation space.

As set forth above, the cell group module, the battery pack, and the electrical device of the present disclosure have at least the following advantageous effects: a plurality of side panel segments are detachably connected to the connecting beam to provide a clamping force for securing the cell stack, which facilitates handling and transport and permits the number of side panel plate segments to be flexibly set as required, thereby enabling flexible adjustment of the size of the space accommodating the cell stacks according to the number of the cell stacks, resulting in flexible assembly, improved space utilization, and reduced cost. Based on the foregoing, the connecting terminal busbars, which are connected to the connecting terminal tabs of two of the adjacent cell stacks, are offset from one another in projection in the first direction and are cross-connected by the bridging busbar so as to realize series and/or parallel interconnection of the two adjacent cell stacks, which contributes to increasing the spacing between the connecting terminal busbars to be connected, thereby increasing the creepage distance and enhancing safety performance.

### BRIEF DESCRIPTION OF THE DRAWINGS

FIG. 1 is a partial structural view of Embodiment 1 of a battery pack of the present disclosure.
FIG. 2 is a partial enlarged view of a cell group module in FIG. 1.
FIG. 3 is a top view of a battery pack in FIG. 1.
FIG. 4 is an enlarged view of a portion A in FIG. 3.
FIG. 5 is a partial exploded view of a cell group module in FIG. 1.
FIG. 6 is a partial structural view of a bridging busbar, a connecting terminal base, and a connecting beam in FIG. 1 when they are connected.
FIG. 7 is a simplified structural view of a battery pack in FIG. 1.
FIG. 8 is a structural view of Embodiment 2 of a battery pack of the present disclosure.
FIG. 9 is an exploded view of a battery pack in FIG. 8.
FIG. 10 is a simplified structural view of an embodiment of an electrical device of the present disclosure.

### DESCRIPTION OF THE EMBODIMENTS

The following describes the embodiments of the present disclosure by way of specific examples, and persons skilled in this technology may easily understand other advantages and efficacy of the present disclosure from the content disclosed in this specification.

It should be noted that the structures, proportions, sizes, and the like illustrated in the drawings attached to this specification are only used to match the content disclosed in the specification for the understanding and reading of persons skilled in this technology, and are not intended to limit the conditions under which the present disclosure may be implemented; therefore, they have no substantial technical significance. Any modification of structures, change in proportional relationships, or adjustment of sizes, without affecting the efficacy that the present disclosure may produce and the objectives that may be achieved, shall still fall within the scope that the technical content disclosed in the present disclosure may cover. Meanwhile, terms such as "upper," "lower," "left," "right," "middle," and "one" cited in this specification are only for the convenience of clear description, and are not intended to limit the scope within which the present disclosure may be implemented. Changes or adjustments in their relative relationships, without substantially altering the technical content, shall also be regarded as the category within which the present disclosure may be implemented.

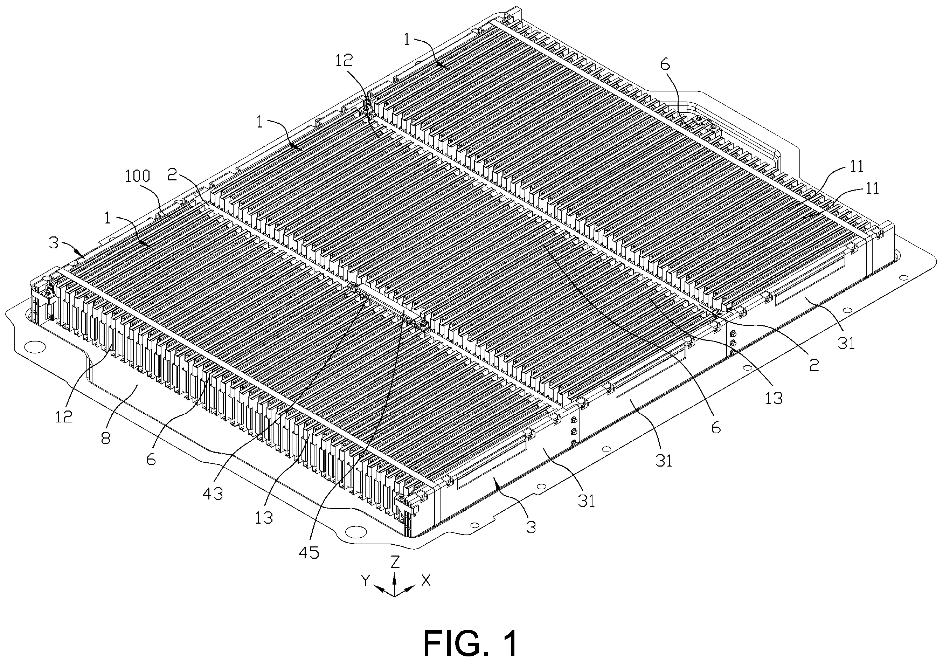

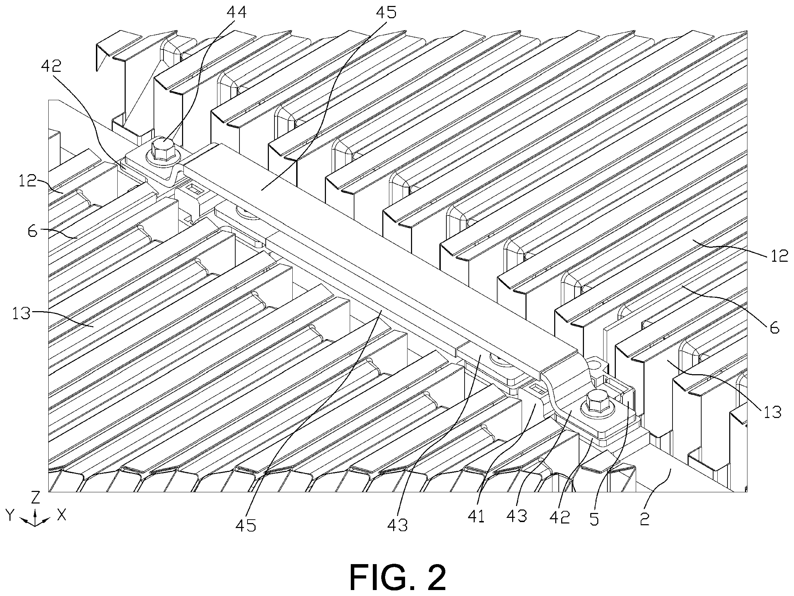

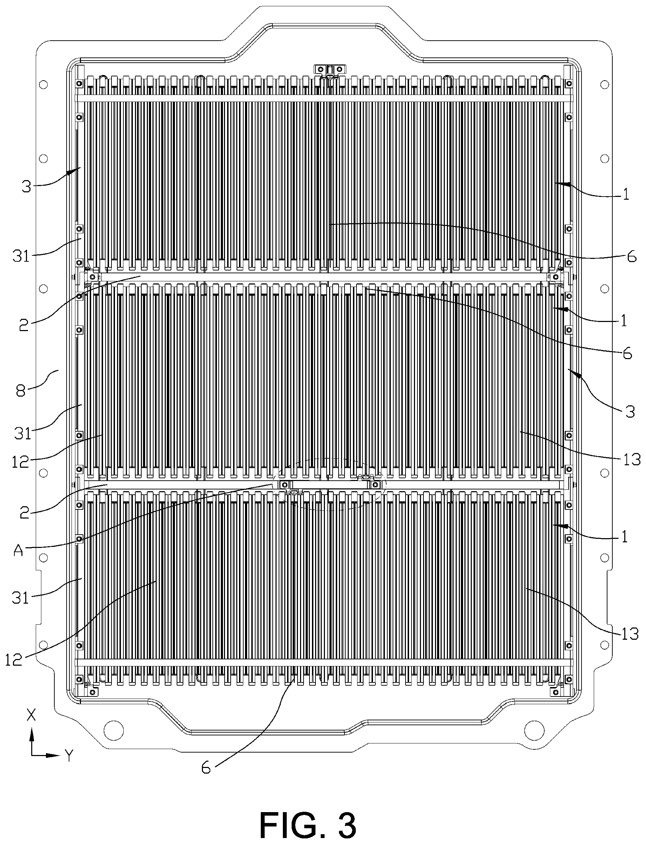

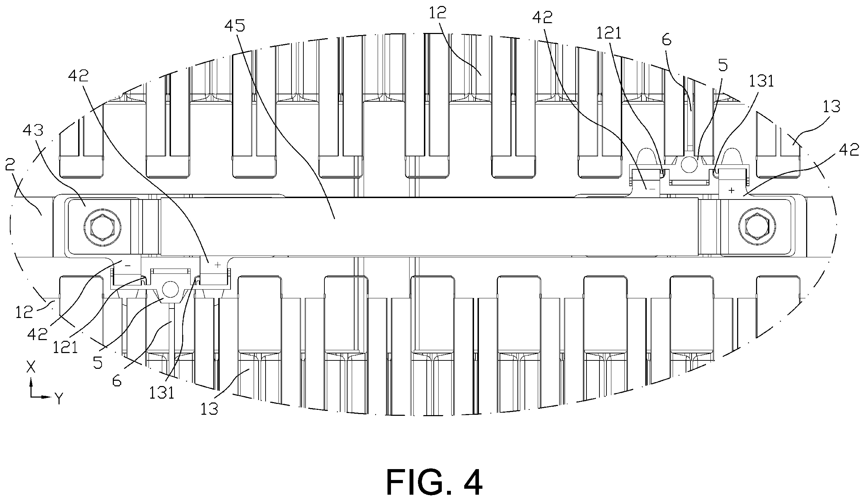

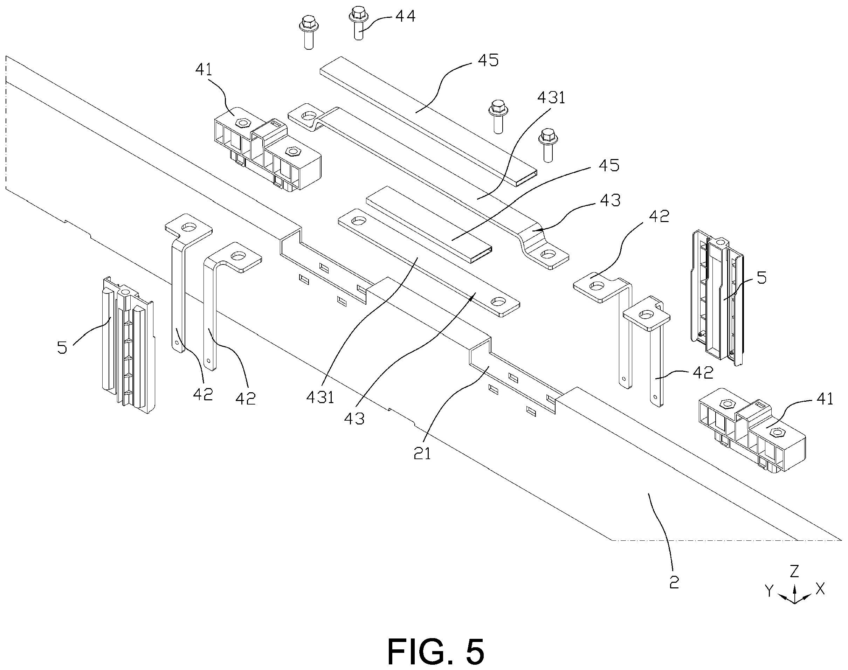

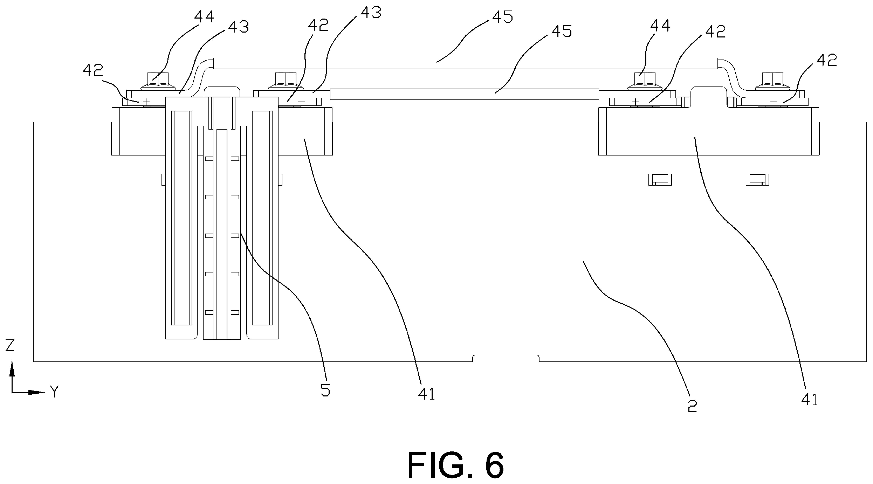

Referring to FIG. 1 to FIG. 6 and FIG. 9, in some optional embodiments, the present disclosure provides a cell group module 100. The cell group module 100 includes a plurality of cell stacks 1, two side panel assemblies 3, a connecting beam 2, a bridging busbar 43, and a connecting terminal busbar 42. In addition to the above components, the cell group module 100 may further include an insulating member 45 and/or a connecting terminal base 41 and/or a battery management system (BMS). The plurality of cell stacks 1 are arranged along a first direction. At least some of the cell stacks 1 have connecting terminal tabs, and each of the cell stacks 1 includes a plurality of cells 11 stacked along a second direction. A connecting beam 2 is arranged between two of the adjacent cell stacks 1. The two side panel assemblies 3 are distributed on both sides of the cell stacks 1 along the second direction. Each of the side panel assemblies 3 includes a plurality of side panel segments 31 distributed along the first direction and detachably connected. The side panel segments 31 located on both sides of the same cell stack 1 are detachably connected to both ends of the corresponding connecting beam 2 respectively, and the side panel segments 31 are capable of clamping and fixing the cell stack 1 when connected to the connecting beam 2. The connecting terminal busbar 42 is connected to the connecting terminal tabs of the cell stack 1, and the connecting terminal busbars 42 correspondingly connected to the connecting terminal tabs of the two adjacent cell stacks 1 are, at least in part, offset from one another in projection along the first direction and are interconnected via the bridging busbars 43, thereby achieving series and parallel connection of the adjacent two cell stacks 1, so as to realize series and/or parallel interconnection of the two adjacent cell stacks 1.

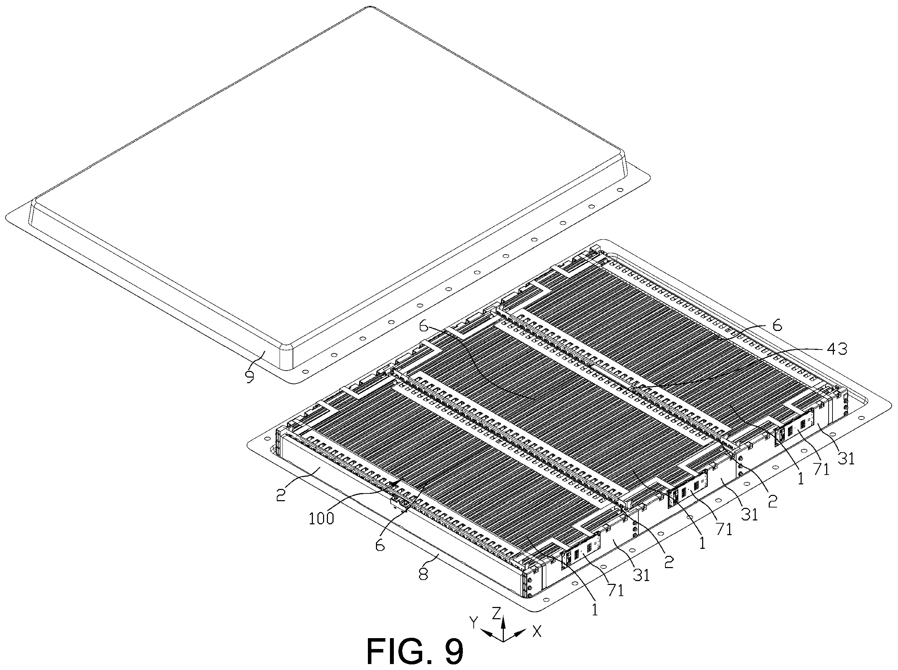

Optionally, a plurality of the connecting beams 2 may be provided, and the plurality of connecting beams 2 are distributed along the first direction. Further, referring to FIG. 1, in the first direction, end portions of the two side panel assemblies 3 are fastened by binding straps wound therearound. The binding straps are arranged corresponding to the end portions of the side panel assemblies 3, and the binding straps are fitted over the end portions of the two side panel assemblies 3 so that the two side panel assemblies 3 are drawn toward each other to clamp the corresponding cell stack 1. Such configuration may ensure the stability of the cell stack 1 being clamped without the need to provide end beams. The binding straps occupy less space and have lighter weight compared to end beams, which contributes to improving space utilization and increasing the energy density of the cell group module 100. Alternatively, referring to FIG. 9, in the first direction, the connecting beams 2 corresponding to the end portions of the side panel assemblies 3 are also provided on both sides of the cell group module 100. That is, the connecting beams 2 formed as end beams are also arranged on a side of the cell stack 1 located at an edge that is away from the cell stack 1 adjacent thereto. The end beams correspond to and are connected to the end portions of the side panel assemblies 3. The connecting beams 2 located between the two adjacent cell stacks 1 are formed as intermediate beams, and the end portions of the two side panel assemblies 3 are connected through the end beams, which contributes to further improving the stability of the corresponding cell stack 1 being clamped and the rigidity of the overall structure. It may be understood that the end portions of the two side panel assemblies 3 may be connected only through the end beams. Alternatively, the end portions of the two side panel assemblies 3 may be fastened only by binding straps wound therearound. Alternatively, the end portions of the two side panel assemblies 3 may be both connected through the end beams 2 and provided with the binding straps wound around the end portions of the two side panel assemblies 3 for fastening, thus further improving the stability of the overall structure.

Optionally, the plurality of side panel segments 31 of the same side panel assembly 3 correspond to the plurality of cell stacks 1 one by one. That is, one side panel segment 31 is independently correspondingly arranged on respective sides of each of the cell stacks 1 distributed along the second direction, thereby enabling simple and flexible assembly, and allows the number of side panel segments 31 within the side panel assembly 3 to be increased or decreased according to the actual quantity requirements of the cell stacks 1, so as to meet the requirements of different charge capacities and facilitate universal configuration. The connecting beam 2 located between the two adjacent cell stacks 1 may correspond to both cell stacks 1 simultaneously, and the adjacent ends of the two adjacent side panel segments 31 on the same side may be connected and fixed on the same connecting beam 2, which contributes to simplifying the structure.

In the present disclosure, the first direction is perpendicular to the second direction. An arrangement direction of the plurality of cell stacks 1, an arrangement direction of the plurality of side panel segments 31 in each of the side panel assemblies 3, a length direction of the side panel segments 31, an arrangement direction of the plurality of connecting beams 2, a length direction of the cell stacks 1, and a length direction of the cells 11 are the same as the first direction, i.e., a direction X in the drawings. An arrangement direction of the plurality of cells 11 in each of the cell stacks 1, an arrangement direction of the two side panel assemblies 3, a length direction of the connecting beams 2, a width direction of the cell stacks 1, and a thickness direction of the cells 11 are the same as the second direction, i.e., a direction Y in the drawings.

Optionally, the cell 11 has tabs, and the tabs of some cells 11 are formed as the connecting terminal tabs of the cell stack 1. Further, the cell 11 includes a pouch cell 11.

Optionally, the connecting terminal busbar 42 includes a copper busbar.

Optionally, the bridging busbar 43 includes a copper busbar.

In the cell group module 100 of the above-described embodiment, the side panel assembly 3 cooperates with the connecting beam 2 to provide a pre-tightening force to clamp the cell stack 1, thereby securing the cell stack 1 with a stable structure. There is no need to additionally assemble a support panel to support the cell stack 1 to meet transportation requirements, which contributes to reducing production process steps and cost reduction. In addition, the side panel assembly 3 includes a plurality of independently arranged side panel segments 31. The side panel segments 31 are detachably connectable to one another, and one side panel segment 31 is detachably connectable to the connecting beam 2, facilitating flexible assembly according to the number of cell stacks 1, avoiding space waste, and being conducive to improving space utilization and further cost reduction. Furthermore, two connecting terminal busbars 42 respectively connected to the connecting terminal tabs of the two adjacent cell stacks 1 are offset from one another in projection along the first direction and are electrically connected via the bridging busbars 43. Such configuration not only realizes series and/or parallel interconnection of the two adjacent cell stacks 1, which contributes to increasing the creepage distance between the two connecting terminal tabs during electrical connection, thereby reducing the probability of occurrence of electrical safety incidents and further improving the safety performance of the cell group module 100.

Referring to FIG. 1 to FIG. 6, in some optional embodiments, a portion of the cells 11 of the same cell stack 1 form a first sub-stack 12, and another portion of the cells 11 form a second sub-stack 13. The first sub-stack 12 of the two adjacent cell stacks 1 is close to the same side panel assembly 3, and the second sub-stack 13 of the two adjacent cell stacks 1 is close to the other side panel assembly 3. That is, the arrangement directions of the first sub-stack 12 and the second sub-stack 13 of the two adjacent cell stacks 1 are the same in the second direction. For example, the first sub-stack 12 and the second sub-stack 13 of the two adjacent cell stacks 1 are both arranged in order from left to right in the second direction, or both are arranged in order from right to left. The connecting terminal tabs include a first tab 121 of the first sub-stack 12 and a second tab 131 of the second sub-stack 13. The first tab 121 of the first sub-stack 12 and the second tab 131 of the second sub-stack 13 in the same cell stack 1 are respectively connected through the bridging busbars 43 to the second tab 131 of the second sub-stack 13 and the first tab 121 of the first sub-stack 12 in the adjacent cell stack 1. For example, the two adjacent cell stacks 1 are a first cell stack and a second cell stack respectively. The connecting terminal busbar 42 connected to the first tab 121 of the first sub-stack 12 of the first cell stack and the connecting terminal busbar 42 connected to the second tab 131 of the second sub-stack 13 of the second cell stack 1 are connected through one bridging busbar 43, and the connecting terminal busbar 42 connected to the second tab 131 of the second sub-stack 13 of the first cell stack and the connecting terminal busbar 42 connected to the first tab 121 of the first sub-stack 12 of the second cell stack are connected through another bridging busbar 43.

Optionally, the number of cells 11 of the two first sub-stacks 12 of the two adjacent cell stacks 1 are not equal each other, and the number of cells 11 of the two second sub-stacks 13 of the two adjacent cell stacks 1 are not equal to each other. Further, the total number of cells 11 of each of the cell stacks 1 may be equal to each other. If the number of cells 11 of the first sub-stack 12 is greater than the number of cells 11 of the first sub-stack 12 of the adjacent cell stack 1, then the number of cells 11 of the second sub-stack 13 is less than the number of cells 11 of the second sub-stack 13 of the adjacent cell stack 1. Alternatively, if the number of cells 11 of the first sub-stack 12 is less than the number of cells 11 of the first sub-stack 12 of the adjacent cell stack 1, then the number of cells 11 of the second sub-stack 13 is greater than the number of cells 11 of the second sub-stack 13 of the adjacent cell stack 1. By adjusting the number of cells 11 of the first sub-stack 12 and the number of cells 11 of the second sub-stack 13 of the adjacent cell stacks 1, the connecting terminal busbars 42 correspondingly connected to each of the sub-stacks may be distributed at intervals in the second direction, and the adjustment flexibility of the interval distance is high, so that the offset overlapping between the two connecting terminal tabs may be achieved through the bridging busbar 43. Such configuration contributes to improving the creepage distance of each of the sub-stacks during connection. In particular, compared with the layout in which the connecting terminal tabs of the two adjacent cell stacks 1 are arranged directly opposite to each other in the first direction and directly connected, the creepage distance during connection of the adjacent cell stacks 1 is increased, and the electrical safety performance is improved.

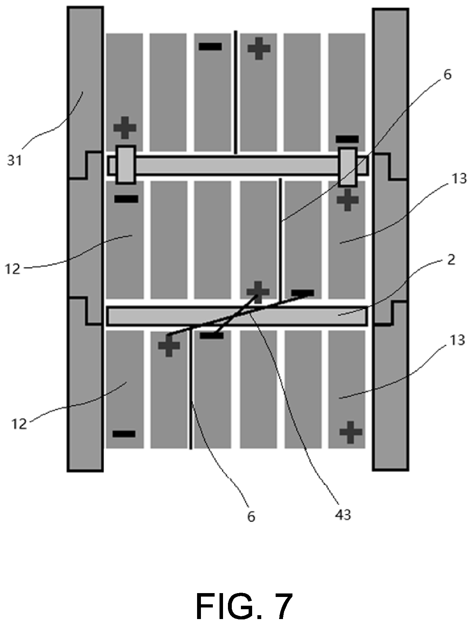

Referring to FIG. 1 to FIG. 7, in some optional embodiments, a height direction of the connecting beam 2 is a third direction. In the third direction, the top of the connecting beam 2 is lower than the top of the cell stack 1, and the bridging busbar 43 is fixed on the top of the connecting beam 2.

In the present disclosure, a height direction of the cell stack 1, the height direction of the connecting beam 2, a height direction of the side panel segment 31, and a height direction of the cell 11 are the same as the third direction, i.e., a direction Z in the drawings.

Optionally, the bridging busbar 43 is fixed on the top of the connecting beam 2 in an insulated manner through the connecting terminal base 41, and the bridging busbar 43 is fixed on the connecting beam 2 in an insulated manner. Further, the connecting terminal base 41 is installed on the connecting beam 2, and the connecting terminal busbar 42 and the bridging busbar 43 are connected to and fixed on the connecting terminal base 41. Specifically, the top of the connecting beam 2 is provided with a first positioning groove 21. At least a portion of the connecting terminal base 41 extends into the first positioning groove 21 and is snap-fixed on the first positioning groove 21. One end of the connecting terminal busbar 42 is electrically connected to the connecting terminal tab of the cell stack 1, the other end of the connecting terminal busbar 42 is bent and stacked on the connecting terminal base 41 together with one end of the bridging busbar 43 along the third direction, and connected and fixed through a first locking member 44. The first locking member 44 includes a bolt. The connection is simple, convenient, and reliable.

Optionally, the first tab 121 and the second tab 131 connected by the same bridging busbar 43 are of opposite polarities, and a portion between both ends of one of the bridging busbars 43 extends along the second direction across the other bridging busbar 43 and is spaced apart from the other bridging busbar 43 in the third direction. By appropriately assigning the positive and negative polarities of the cells 11, the bridging busbar 43 is configured both to connect, in series, the two sub-stacks of the two adjacent cell stacks 1, and to avoid intersecting contact with the other bridging busbar 43, thereby achieving a compact layout conducive to improved space utilization. Further, a portion of the bridging busbar 43 between both ends thereof defines a bridging portion 431, over which the insulating member 45 is disposed to cover the bridging portion 431, thereby facilitating electrical insulation. Specifically, one of the bridging busbars 43 is Ω-shaped, and the other bridging busbar 43 is of a straight-line shape; the Ω-shaped bridging busbar 43 spans, along the second direction, across the straight-line bridging busbar 43.

Optionally, an insulating partition 6 is disposed between the first sub-stack 12 and the second sub-stack 13 of the same cell stack 1, or in other words, the insulating partition 6 is disposed between some adjacent cells 11 of the same cell stack 1. The connecting terminal busbar 42 is installed on the insulating partition 6 through a busbar bracket 5. The busbar bracket 5 includes a plastic bracket. The connecting terminal busbar 42 may be riveted and fixed on the busbar bracket 5. Since the material of the connecting terminal tab is relatively soft and it is difficult to provide stable installation support for the connecting terminal busbar 42, the insulating partition 6 may provide installation support for the connecting terminal busbar 42 through the busbar bracket 5, and the connecting terminal busbar 42 is not prone to shaking, which contributes to reducing the difficulty of connecting the connecting terminal busbar 42 and the bridging busbar 43. Both sides of the insulating partition 6 in the second direction are respectively bonded and fixed on the cells 11 of the first sub-stack 12 and the cells 11 of the second sub-stack 13 of the same cell stack 1. Further, in the first direction, a length of the insulating partition 6 is not less than a length of an insulating film of the cell 11. In the third direction, a width of the insulating partition 6 is not less than a maximum width of an electrode sheet stack of the cell 11, which contributes to ensuring the insulation effect.

In the cell group module 100 of the above embodiment, the bridging busbar 43 is fixed on the connecting beam 2 in an insulated manner, which may not only utilize the free space above the connecting beam 2 to improve space utilization, but also eliminates the need to additionally provide extra components to support the bridging busbar 43, which contributes to reducing the number of components, simplifying the structure, and further improving space utilization.

Referring to FIG. 9, in some optional embodiments, the battery management system includes a main control panel and a plurality of slave control panels 71, and the plurality of slave control panels 71 are installed and fixed on the side panel segment 31 and are electrically connected to the cell stack 1 corresponding to the side panel segment 31.

Optionally, each of the side panel segments 31 is provided with a slave control panel 71, and the slave control panel 71 is electrically connected to the cell stack 1 corresponding to the side panel segment 31, so as to diagnose and control the cell stack 1 according to voltage signals of the plurality of cells 11 in the cell stack 1. Specifically, the main control panel is connected to the plurality of slave control panels 71, the slave control panels 71 may collect the voltage signals of the cells 11 through a flexible printed circuit (FPC), and the main control panel diagnoses and controls each of the cells 11 through the plurality of slave control panels 71 respectively.

In the cell group module 100 of the above embodiment, after the cell group module 100 is assembled, a battery pack without a housing may be formed, so that the battery pack may be directly installed and used subsequently, which contributes to simplifying the process steps of subsequent installation and use.

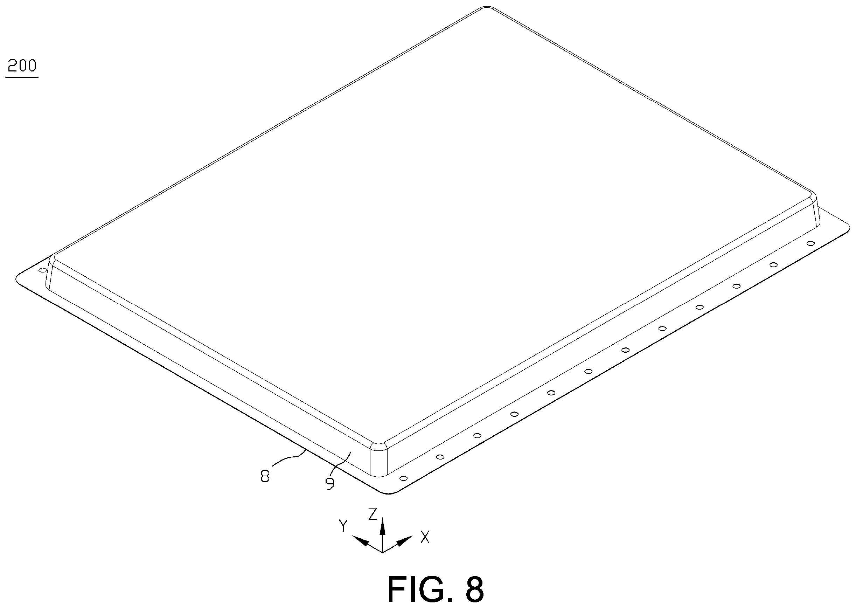

Referring to FIG. 8 and FIG. 9, in some optional embodiments, the present disclosure further provides a battery pack 200, which includes the cell group module 100 in any one of the above embodiments.

Optionally, the battery pack 200 further includes an upper cover 9 and a plate-shaped lower housing 8. The side panel segment 31 is connected to the lower housing 8 to mount the cell stack 1 on the lower housing 8. The upper cover 9 and the lower housing 8 are connected in a sealed manner to define an installation space accommodating the cell group module 100, and the installation space is filled with a coolant that submerges the cell stack 1. Further, the housing formed by connecting the upper cover 9 and the lower housing 8 is provided with a liquid inlet and a liquid outlet, and the coolant is filled through the liquid inlet into the installation space until the coolant flows out from the liquid outlet, so that the coolant completely fills the installation space and the cell stack 1 in the installation space is completely submerged in the coolant, thus achieving immersion cooling with a good cooling effect. A gap region between the connecting beam 2 and the upper cover 9 may provide a placement space for the bridging busbar 43, thereby making a good use of a free space and improving space utilization. In addition, the side panel assembly 3 and the connecting beam 2 in the cell group module 100 cooperate to secure the cell stack 1, so that no additional beam structure needs to be provided on an outer periphery of the plate-shaped lower housing 8 to fasten the cell stack 1, thereby simplifying the structure, reducing weight, and cost reduction.

Optionally, the number of cell group modules 100 in the battery pack 200 is one, and the assembled cell group module 100 may be directly loaded into the lower housing 8 of the battery pack 200, thus simplifying the subsequent installation steps of loading into the housing, with easy and efficient installation.

Specifically, referring to FIG. 9, during the assembly process, the side panel segment 31 of the side panel assembly 3 is connected to the connecting beam 2 to clamp and fix the corresponding cell stack 1. The slave control panel 71 of the battery management system is fixed on the side panel segment 31 and electrically connected to the corresponding cell stack 1. After the cell group module 100 is assembled, the assembled cell group module 100 is then placed on the lower housing 8. The side panel segment 31 is connected and fixed on the lower housing 8 to secure the cell group module 100. The upper cover 9 is installed, and the upper cover 9 and the lower housing 8 are connected in a sealed manner to define the installation space. The installation space is filled with the coolant, and the coolant submerges the cell stack 1 to achieve immersion cooling, thus completing the final assembly.

The battery pack of the above embodiments allows the cell group module 100 to be directly installed on the lower housing 8 of the battery pack after assembly is completed without the need to separately and independently install the cell stack 1 and electrical structural components such as the slave control panel 71 into the lower housing 8. Such configuration is simple in structure with easy and convenient installation operations.

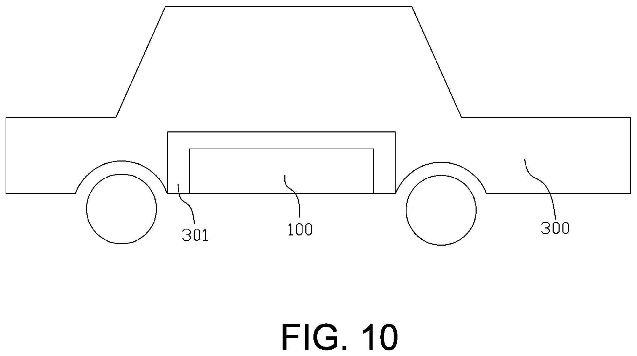

Referring to FIG. 1 and FIG. 10, in some optional embodiments, the present disclosure further provides an electrical device, including the cell group module 100 as described in any of the above embodiments.

Optionally, the electrical device includes a vehicle 300. The bottom of the vehicle 300 is provided with an installation space 301, and the cell group module 100 is installed in the installation space 301 to form a power supply module of the vehicle. Further, the vehicle 300 has a chassis. The chassis is provided with an installation space 301 therein, and the cell group module 100 may be connected to the chassis such that the cell group module 100 is directly installed in the installation space 301 of the chassis. Such configuration is simple in structure and has a compact layout, which contributes to improving space utilization. Specifically, the side panel segment 31 of the cell group module 100 is connected to the chassis to fix the cell stack 1.

Optionally, the number of cell group modules 100 in the vehicle is one, and the assembled cell group module 100 may be directly loaded into the installation space 301 of the electrical device. There is no need to carry out a secondary assembly of the overall structure of the cell group module 100, thereby simplifying the subsequent installation steps, making installation simple and efficient. In addition, the chassis of the vehicle provides protection for the cell group module 100, eliminating the need for an additional housing to protect the cell group module 100, which simplifies the structure and contributes to cost reduction.

In the cell group module 100, the battery pack, and the electrical device of the present disclosure, the side panel assembly 3 cooperates with the connecting beam 2 to fasten the cell stack 1, such that the overall structure is stable and reliable, while simplifying the structure and meeting transportation requirements. Moreover, each of the side panel segments 31 of the side panel assembly 3 is independently detachable, allowing the side panel segments 31 to be flexibly configured according to the number of cell stacks 1, thereby enabling flexible assembly, improving space utilization, and reducing cost. In addition, the two connecting terminal busbars 42 connected to the connecting terminal tabs of the two adjacent cell stacks 1 are distributed at intervals along a stacking direction of the plurality of cell stacks 1, which serves to separate and distance the positions of high-voltage connection terminals between the cell stacks 1. Consequently, when connection is effected through the bridging busbar 43, the creepage distance is increased, thereby improving electrical safety performance and, in turn, enhancing the safety performance of the overall structure.

In the description of this specification, references to the terms "this embodiment," "example," "specific example," and the like mean that the specific features, structures, materials, or characteristics described in connection with the embodiment or example are included in at least one embodiment or example of the present disclosure. In this specification, the schematic expression of the above terms do not necessarily refer to the same embodiment or example. Furthermore, the specific features, structures, materials, or characteristics described may be combined in any suitable manner in any one or more embodiments or examples.

## Claims

1. A cell group module (100), comprising:
a plurality of cell stacks (1), arranged along a first direction, wherein the cell stacks (1) have connecting terminal tabs, and each of the cell stacks (1) comprises a plurality of cells (11) stacked along a second direction;
a connecting beam (2), arranged between two of the adjacent cell stacks (1);
two side panel assemblies (3), distributed on both sides of the cell stack (1) along the second direction, wherein each of the side panel assemblies (3) comprises a plurality of side panel segments (31) distributed along the first direction and detachably connected, the side panel segments (31) located on both sides of the same cell stack (1) are detachably connected to both ends of the corresponding connecting beam (2) respectively, and the side panel segments (31) are capable of clamping and fixing the cell stack (1) when connected to the connecting beam (2);
bridging busbars (43);
connecting terminal busbars (42), connected to the connecting terminal tabs, wherein the connecting terminal busbars (42) correspondingly connected to the connecting terminal tabs of the two adjacent cell stacks (1) are, at least in part, offset from one another in projection along the first direction and are interconnected via the bridging busbars (43).

2. The cell group module (100) according to claim 1, wherein a portion of the cells (11) of the same cell stack (1) forms a first sub-stack (12), and another portion of the cells (11) forms a second sub-stack (13), the first sub-stacks (12) of the two adjacent cell stacks (1) are close to the same side panel assembly (3), the second sub-stacks (13) of the two adjacent cell stacks (1) are close to the other side panel assembly (3), the connecting terminal tabs comprise a first tab (121) of the first sub-stack (12) and a second tab (131) of the second sub-stack (13), the first tab (121) of the first sub-stack (12) and the second tab (131) of the second sub-stack (13) in the same cell stack (1) are connected through the bridging busbar (43) to the second tab (131) of the second sub-stack (13) and the first tab (121) of the first sub-stack (12) in the adjacent cell stack (1), respectively.

3. The cell group module (100) according to claim 2, wherein the number of the cells (11) of two of the first sub-stacks (12) of the two adjacent cell stacks (1) are not equal to each other, and the number of the cells (11) of two of the second sub-stacks (13) of the two adjacent cell stacks (1) are not equal to each other.

4. The cell group module (100) according to claim 2, wherein a height direction of the connecting beam (2) is a third direction, in the third direction, a top of the connecting beam (2) is lower than a top of the cell stack (1), and the bridging busbar (43) is fixed on the top of the connecting beam (2).

5. The cell group module (100) according to claim 4, wherein the first tab (121) and the second tab (131) connected by the same bridging busbar (43) are of opposite polarities, and a portion between both ends of one of the bridging busbars (43) extends along the second direction across the other bridging busbar (43) and is spaced apart from the other bridging busbar (43) in the third direction.

6. The cell group module (100) according to claim 1 or 5, wherein the cell group module (100) further comprises an insulating member (45), a portion between the both ends of the bridging busbar (43) is a bridging portion (431), and the insulating member (45) covers the bridging portion (431).

7. The cell group module (100) according to claim 2, wherein an insulating partition (6) is disposed between the first sub-stack (12) and the second sub-stack (13) of the same cell stack (1), and the connecting terminal busbar (42) is mounted on the insulating partition (6) through a busbar bracket (5).

8. The cell group module (100) according to claim 1, wherein the cell group module (100) further comprises a connecting terminal base (41), the connecting terminal base (41) is mounted on the connecting beam (2), and the connecting terminal busbar (42) and the bridging busbar (43) are connected and fixed on the connecting terminal base (41).

9. The cell group module (100) according to claim 1, wherein the cell group module (100) further comprises a battery management system, the battery management system comprises a plurality of slave control panels (71), the slave control panels (71) are mounted and fixed on the side panel segments (31), and the slave control panels (71) are electrically connected to the cell stacks (1) corresponding to the side panel segments (31).

10. The cell group module (100) according to claim 1, wherein the cell comprises a pouch cell (11).

11. A battery pack, comprising the cell group module (100) according to any one of claims 1-10.

12. The battery pack according to claim 11, wherein the battery pack further comprises an upper cover (9) and a plate-shaped lower housing (8), the upper cover (9) and the lower housing (8) are connected in a sealed manner to define an installation space accommodating the cell group module (100), and the installation space is filled with a coolant that submerges the cell stack (1).

13. An electrical device, comprising the cell group module (100) according to any one of claims 1-10.

14. The electrical device according to claim 13, wherein the electrical device comprises a vehicle (300), a bottom of the vehicle (300) has an installation space (301), and the cell group module (100) is installed in the installation space (301).
